# EUROPEAN PATENT SPECIFICATION

(11) **EP 4 374 588 B1**
(45) Date of publication and mention of the grant of the patent: **04.11.2026**
(21) Application number: 21773044.9
(22) Date of filing: 02.09.2021
(51) Int. Cl.: H04W 4/40, H04W 4/44, H04W 4/46, G08G 1/01, G06F 21/62, G08G 1/0967

(54) **METHODS, VEHICLES, AND SYSTEMS FOR EXCHANGING INFORMATION BETWEEN VEHICLES AND A VEHICLE-EXTERNAL COMMUNICATION SYSTEM**
VERFAHREN, FAHRZEUGE UND SYSTEME ZUM INFORMATIONSAUSTAUSCH ZWISCHEN FAHRZEUGEN UND EINEM FAHRZEUGEXTERNEN KOMMUNIKATIONSSYSTEM
PROCÉDÉS, VÉHICULES ET SYSTÈMES POUR L'ÉCHANGE D'INFORMATIONS ENTRE VÉHICULES ET UN SYSTÈME DE COMMUNICATION EXTERNE AUX VÉHICULES

(43) Date of publication of application: 29.05.2024
(73) Proprietor: CARIAD SE, 38440 Wolfsburg (DE)
(72) Inventor: CHITTURI, Kiran, Kumar, 44809 Bochum (DE); HANUMANTHARAYAPPA, Chethankumar, 44799 Bochum (DE); HU, Jinwei, 64287 Darmstadt (DE); KAESLER, Thomas, 47167 Duisburg (DE); KLEIN, Nicole, 57555 Mudersbach (DE)
(74) Representative: Hofstetter, Schurack & Partner
(86) International application number: PCT/EP2021/074203
(87) International publication number: WO 2023/030627

(56) References cited:
- WO-A1-2017/041838
- US-A1- 2012 135 723
- US-A1- 2019 297 045
- US-A1- 2020 260 239
- ASUQUO PHILIP ET AL: "Security and Privacy in Location-Based Services for Vehicular and Mobile Communications: An Overview, Challenges, and Countermeasures", IEEE INTERNET OF THINGS JOURNAL, IEEE, USA, vol. 5, no. 6, 1 December 2018 (2018-12-01), pages 4778 - 4802, XP011705655, DOI: 10.1109/JIOT.2018.2820039

## Description

The present disclosure relates to methods for exchanging information between vehicles and a vehicle-external communication system. The present disclosure also relates to vehicles for exchanging information between vehicles and a vehicle-external communication system. The present disclosure further relates to systems for exchanging information between vehicles and a vehicle-external communication system.

Traffic volumes and traffic flows can be important for controlling current and planning future traffic infrastructure. With mobile telecommunication networks and the emergence of connected cars, it can be possible to record traffic flows with unprecedented precision, as the data can be recorded by a large number of vehicles.

When collecting traffic data, data protection requirements should be taken into account, since movement profiles of vehicles and their drivers can be created from the data and personal preferences of the driver can be derived.

In current in-car anonymization schemes, each vehicle can communicate with a vehicle-external communication system, such as a cloud backend, exclusively. A vehicle can submit anonymized data to the backend, whereas the backend can provide traffic data, which can include information about the traffic, for example the traffic density, in a response to the vehicle.

The availability of traffic information can play a key role in the effectiveness and efficiency of anonymization. For example, only when a certain number of vehicles is in the surroundings of a vehicle, the vehicle may be able to send anonymized data, or the vehicle may have to delay the submission of data, simply because there are not enough peer vehicles nearby. A lot of delay for reaching an acceptable anonymization level may occur, as a vehicle may have to wait for allowance from the backend system based on a centralized assessment of sufficient traffic density for starting anonymization. Thus, it can be a desire to reduce the time delay for reaching an acceptable level of anonymization.

DE 10 2015 216 414 A1 describes a method for detecting movement information.

WO 2020/108964 A1 describes a method for an anonymized transmission of sensor data of a vehicle to a vehicle-external receiving unit, to an anonymizing system, and to a receiving unit. The method comprises: determining the sensor data at a measurement location at a measurement time, determining a traffic density in an environment of the measurement location, determining an anonymized time and/or an anonymized location, and calculating an anonymization probability of the vehicle, which results from the traffic density and the anonymized time and/or location, determining whether the anonymization probability meets a specified anonymization condition, and if the anonymization condition is met, transmitting the sensor data to the external receiving unit, the anonymized time being indicated as a measuring time indication and/or the anonymized location being indicated as a measurement location indication.

US 2019/0297045 A1 describes systems and methods for managing vehicles. One method, for example, includes receiving a first message on a first channel of a plurality of channels. The first channel may be associated with a vehicle that is traveling on a route. The first message may include a request to prioritize a first geographical location of the route. The method also includes determining whether the first geographical location can be prioritized and publishing a second message to a second channel of the plurality of channels in response to determining that the first geographical location can be prioritized. The vehicle may be a subscriber to the second channel.

There is a need for methods, systems and vehicles, which can in an improved and more efficient way exchange information between vehicles and a vehicle-external communication system.

At least in some embodiments, a method for exchanging information between vehicles and a vehicle-external communication system comprises:
receiving, at a first vehicle, traffic data from the communication system, wherein the first vehicle is a publisher of a queue of a publish-subscribe service; and
providing, by the first vehicle, a publication including at least a portion of the traffic data to the queue of the publish-subscribe service, for forwarding the publication to at least a second vehicle which is a subscriber of the queue.

Thus, in the method, a publish-subscribe service is used to communicate traffic data, which include information about the traffic density in the surroundings of the first vehicle, from the first vehicle to a second vehicle. For example, the first vehicle can publish a traffic density, which the vehicle has received from the vehicle-external communication system. Subscribers, such as the second vehicle, can get this information and they can do anonymization more efficiently, in particular before they provide anonymized data to the communication system.

The first vehicle may send anonymized data to the communication system and the first vehicle may receive the traffic data from the communication system in response to the sending of the anonymized data. The sending of anonymized data to the communication system may thus trigger the sending of traffic data by the communication system to the first vehicle.

The first vehicle anonymizes data, and at least a portion of the received traffic data is employed for anonymizing of the data. The data that is anonymized may have been collected by the first vehicle, for example by use of sensors of the first vehicle, so that the data can include information about the surroundings of the first vehicle. In particular, the collected data can include information about the traffic density in the surroundings of the first vehicle.

The first vehicle calculates a time delay for sending the anonymized data to the communication system, and at least a portion of the received traffic data, for example a traffic density, is employed in the calculation of the time delay, and the anonymized data are sent to the communication system in accordance with the calculated time delay.

At least in some embodiments, a method for exchanging information between vehicles and a vehicle-external communication system comprises:
subscribing, by a second vehicle, to a queue of a publish-subscribe service; and
receiving, at the second vehicle, a publication including at least a portion of traffic data from the queue of the publish-subscribe service, the publication being provided from a first vehicle which is a publisher of the queue and the traffic data being provided by the vehicle-external communication system to the first vehicle.

The second vehicle, as a subscriber of the queue, can get the traffic data, which include traffic density information, from the first vehicle, without having to directly communicate with the vehicle-external communication system. Thereby, anonymization can be done more efficiently.

Moreover, the second vehicle can get data, such as environmental data or traffic data, from a plurality of vehicles in the same way as the first vehicle provides data to the second vehicle. Once the second vehicle receives traffic data from other vehicles, it can make use of this data for its anonymization. Since now with the help of the received traffic data the second vehicle understands the traffic better, it can perform the anonymization more efficiently.

The second vehicle anonymizes data, and at least a portion of the received traffic data is employed for anonymizing the data.

The second vehicle calculates a time delay for sending the anonymized data to the communication system. At least a portion of the received traffic data is employed in the calculation of the time delay. The anonymized data is sent to the communication system in accordance with the calculated time delay.

At least in some not claimed embodiments, a method for exchanging information between vehicles and a vehicle-external communication system comprises: receiving, at a queue of a publish-subscribe service, from a first vehicle a publication including at least a portion of the traffic data, the first vehicle being a publisher of the queue; and forwarding the publication to at least a second vehicle which is a subscriber of the queue, wherein the traffic data is provided by the vehicle-external communication system to the first vehicle.

The publish-subscribe service may set a time-to-live constraint on the publication. The publish-subscribe service maintains a defined inactivity duration in subscription expiration policies, wherein the subscription of the second vehicle is terminated if the second vehicle is inactive for an amount of time that exceeds the inactivity duration.

The publish-subscribe service may receive from another vehicle a further publication including the at least a portion of the traffic data, and the publish-subscribe service may only forward the publication and may not forward the further publication, if the publication and the further publication are received within a predetermined time period. The load on the service can thereby be reduced.

At least in some embodiments of the present invention, a method for exchanging information between vehicles and a vehicle-external communication system comprises:
receiving, at a first vehicle, a publication including traffic change information data including information about a traffic change from a queue of a publish-subscribe service, the publication being provided in response to a second vehicle causing the traffic change by the second vehicle which is a publisher of the queue;
anonymizing, by the first vehicle, data, wherein at least a portion of the traffic change information data is employed for anonymizing the data;
sending, by the first vehicle, the anonymized data to the communication system.

The second vehicle may therefore directly communicate a traffic change, which is caused by the second vehicle, to the first vehicle. Thereby the anonymization of the data can be performed on the basis of more accurate data. The traffic change information data can, for example, be sent in a situation where the second vehicle gets started and joins traffic, as the second vehicle then adds to traffic density. In another example, when the second vehicle turns off at a cross or comes to still at a parking place, it can change the traffic density. In such cases, the second vehicle can publish an event, reporting its existence in a region to which the queue can be associated.

Other vehicles, such as the first vehicle, that subscribe to the "region" queue can get informed about the publishing vehicle and can take it into account when anonymizing data.

The first vehicle may calculate a time delay for sending the anonymized data to the communication system. At least a portion of the traffic change information data may be employed in the calculation of the time delay. The anonymized data may be sent to the communication system in accordance with the calculated time delay.

In some embodiments of the present invention, a method for exchanging information between vehicles and a vehicle-external communication system comprises:
causing, by a second vehicle, a traffic change,
generating, by the second vehicle, traffic change information data with information about the traffic change; and
sending, by the second vehicle, a publication including traffic change information data with information about a traffic change to a queue of a publish-subscribe service, the second vehicle being a publisher of the queue.

At least in some embodiments, a vehicle can be configured to carry out the methods described herein in particular with reference to the first or second vehicle.

At least in some embodiments, a publish-subscribe service can be configured, when executed on a computing system, to carry out a method described herein in particular with reference to the publish-subscribed service.

At least in some embodiments, a system for exchanging information between vehicles and a vehicle-external communication system comprises:
at least a first and second vehicle;
a vehicle-external communication system; and
a publish-subscribe service;
wherein the first vehicle is configured to receive traffic data from the communication system, wherein the first vehicle is a publisher of a queue of a publish-subscribe service; and
wherein the first vehicle is configured to provide a publication including at least a portion of the traffic data to the queue of the publish-subscribe service, wherein the publish-subscribe service is configured to forward the publication to at least the second vehicle which is a subscriber of the queue; and
wherein the second vehicle is configured to receive the publication including the at least a portion of traffic data from the queue of the publish-subscribe service.

At least in some not claimed embodiments, a system for exchanging information between vehicles and a vehicle-external communication system comprises:
at least a first and second vehicle;
a vehicle-external communication system; and
a publish-subscribe service;
causing, by a second vehicle, a traffic change,
wherein the second vehicle is configured, in response to causing a traffic change, traffic change information data with information about the traffic change;
wherein the second vehicle is configured to provide a publication including traffic change information data with information about a traffic change to a queue of the publish-subscribe service, wherein the second vehicle is a publisher of the queue;
wherein the first vehicle is configured to receive the publication including the traffic change information data with information about a traffic change from the queue of a publish-subscribe service,
wherein the first vehicle is configured to anonymize data, wherein at least a portion of the traffic change information data is employed for anonymizing the data; and
wherein the first vehicle is configured to send the anonymized data to the communication system.

The queue can be a "region" queue to which vehicles, such as the first and second vehicle, can subscribe or be a publisher, when they are located in the region associated with the queue. Thereby, for example, the vehicles can receive and exchange traffic information which is specific for the respective region.

The publish-subscribe service and the vehicle external communication system can be implemented by a suitable network and/or cloud infrastructure in a way that vehicles can communicate with such infrastructure via a mobile communication system. Various exemplary embodiments in accordance with the present disclosure will be described with reference to the drawings, in which:
- Fig. 1: shows schematically an exemplary system for exchanging information between vehicles and a vehicle-external communication system in accordance with the present invention; and
- Fig. 2: shows schematically another exemplary system for exchanging information between vehicles and a vehicle-external communication system in accordance with the present invention.

In-car anonymization can be implemented such that each vehicle communicates exclusively with a vehicle-external communication system, which can be a cloud-based backend communication system. Through this communication, a vehicle can submit anonymized data to the backend communication system, whereas the backend communication system can provide traffic information, such as, for example, a traffic density, in its response to the data submission.

The availability of traffic information can play a key role in the effectiveness and efficiency of anonymization. For example, a vehicle might need to estimate how many vehicles there are in its surroundings. Only when there are a certain amount of peer vehicles, as defined by a campaign, may the vehicle "hide in the crowd", which can mean that the vehicle can be anonymized. Therefore, the traffic density information can be a key to this estimation. For the purpose of anonymization, a vehicle may have to delay the submission of data to the backend communication system, simply because there are not enough peer vehicles nearby. The delay time can be estimated such that there are enough vehicles passing by during a time interval corresponding to the estimated delay time. This estimation can again depend on the traffic information. A question here can be how to provide vehicles with real-time traffic information without overwhelming the backend communication system.

The system of Fig .1 comprises at least a first vehicle 11, a second vehicle 13, a vehicle-external communication system 15, and a publish-subscribe service 19.

The communication system 15 can for example be a backend system and it can be implemented as a server system or any other suitable system, such as a cloud based system, which can offer data services to the vehicles 11 or 13. The communication between vehicles and the communication system 15 can be implemented via one or more mobile communication systems 17. For example, each of the first and second vehicle 11, 13 can be configured to connect permanently or temporarily to a mobile communication system 17 through which the respective vehicle can communicate with the communication system 15. Alternatively, each vehicle 11, 13 can connect to a cell phone of the respective driver, which can further connect the respective vehicle to the communication system 15 via mobile communication system 17.

The publish-subscribe service 19 can be provided by a publish-subscribe system that can be hosted by the communication system 15 or by a separate communication system with which the vehicles can communicate via one or more mobile communication systems 17.

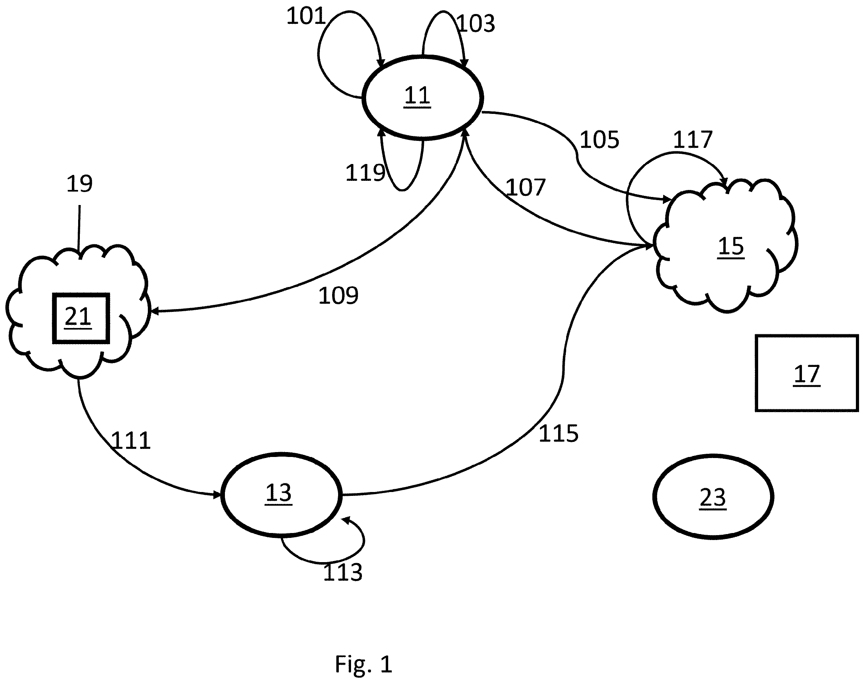

In the system of Fig. 1, the first vehicle 11 can be configured to collect data and to anonymize the collected data locally, as indicated by loop 101 in Fig. 1. Furthermore, as indicated by loop 103, the first vehicle can be configured to calculate a delay time based on anonymization parameters, for example an estimated traffic density. The first vehicle 11 can further submit the anonymized data in accordance with the delay time to the communication system 15, as indicated by arrow 105 in Fig. 1.

In response to the reception of the anonymized data, the communication system 15 can send traffic data to the first vehicle 11, see arrow 107. The traffic data can include, among other data, traffic information. The traffic information can in particular be related to the environment of the first vehicle 11 and, thus, to the region in which the vehicle is located, and the traffic data can include information about the traffic density.

The first vehicle 11 is configured to receive the traffic data from the communication system 15. The first vehicle 11 can be a publisher of a queue 21 of the publish-subscribe service 19. The first vehicle 11 can publish at least a portion of the traffic data, such as at least some of the traffic information, in the queue 21 of the publish-subscribe service 19. More specifically, as indicated by arrow 109, the first vehicle 11 can send a publication including at least a portion of the traffic data to the queue 21 of the publish-subscribe service 19.

The publish-subscribe service can be configured to forward the publication to other vehicles that have subscribed to the queue 21. The queue 21 can in particular be related to a region in which the publishing first vehicle 11 and the subscriber vehicles are located. In another example, the queue 21 can be related to a particular section of a road or highway on which the publishing first vehicle 11 and the subscriber vehicles are travelling.

The second vehicle 13 can be a subscriber to the queue 21. Similarly, a third vehicle 23 can be a subscriber of the queue 21. Although the following explanations are made with regard to the second vehicle 13, they are also valid for the third vehicle 23 or any other vehicle that is subscriber of queue 21. The subscriber vehicle can also be publishers of the queue. Thus, the functionality described with regard to the first vehicle 11 can also be implemented in the second or third vehicle 13, 23.

As indicated by arrow 111, the publication is forwarded by the publish-subscribe service 19 to the second vehicle 13, which can receive the publication with traffic data from the queue 21 of the publish-subscribe service 19.

As indicated by loop 113, the second vehicle 13 can collect data, such as traffic information. Furthermore, the second vehicle 13 can calculate a time delay for sending anonymized data taking at least a portion of the received traffic data into account. The second vehicle 13 can adjust anonymization parameters in accordance with the calculated time delay.

Furthermore, as indicated by arrow 115, the second vehicle 13 can send anonymized data to the communication system 15 in accordance with the calculated time delay.

In the communication system 15, the process illustrated by loop 117 can be carried out, which can include to a check of the anonymization quality and a calculation of the traffic information. Thereby, for example, a perceived traffic density can be calculated. In the system of Fig. 1, vehicles are enabled to publish and subscribe to traffic information, while the backend system, which corresponds to the communication system 15, communicates traffic information to a receiving vehicle, such as the first vehicle 11. The second vehicle 13 can receive the communicated traffic information via queue 21 from the first vehicle 11. Thereby, the exchange of traffic information between vehicles is facilitated while imposing limited communication burden on the backend communication system 15.

In the system of Fig. 1, the publish-subscribe service 19 can set a time-to-live (TTL) constraint on the publications that are communicated via the service and thus via queue 21. The communicated traffic information reflect real-time information, which can get outdated easily. For example, on an express highway, traffic status may vary on a minute basis. With TTL constraints, outdated information can be removed automatically without being communicated to subscriber vehicles. As such, the overall communication overhead can be reduced.

In the system of Fig. 1, the publish-subscribe service 19 can maintain a defined inactivity duration in subscription expiration policies. The subscription of the second vehicle 13 can for example by terminated if the second vehicle 13 is inactive for a defined amount of time that exceeds a pre-specified inactivity duration. For example, it can be seen as a waste of communications to send data to parked vehicles. Parked vehicles can be detected by maintaining a short inactivity duration. Using a short inactivity duration in subscription expiration policies can provide as advantage that the number of vehicles to which traffic information is provided can be reduced, as for example parked vehicles are ruled out. Using a short inactivity duration in subscription expiration policies further requires no additional communication from parked vehicles to detect their parking status.

The publish-subscribe service 19 can furthermore be configured to pre-process published events in order to avoid flooding. For example, when different vehicles publish events with the same traffic information, only one is retained and pushed to subscribing vehicles. Thus, the publish-subscribe service 19 can receive from another vehicle, such as, for example, the third vehicle 23, a further publication which includes the traffic data which was already provided by the first vehicle 11. The publish-subscribe service 19 can then be configured to only forward the publication from the first vehicle 11 and not to forward the further publication, in particular if both publications are received within a predetermined time period.

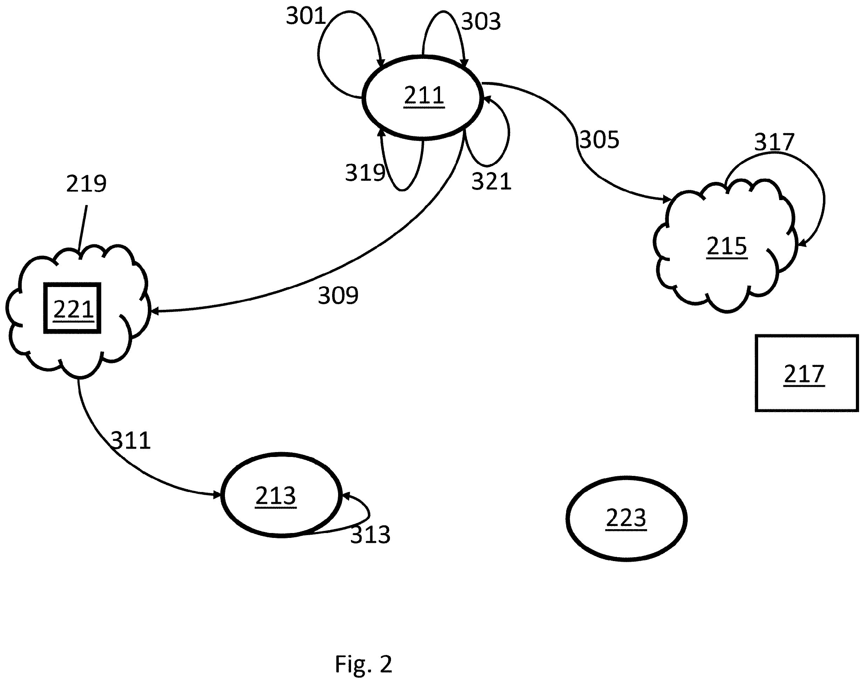

The system of Fig. 2 can be employed for exchanging information between vehicles and a vehicle-external communication system. The system of Fig. 2 comprises at least a first vehicle 211, a second vehicle 213, a vehicle-external communication system 215 and a publish-subscribe service 219.

The communication system 215 can for example be a backend system and it can be implemented as a server system or any other suitable system that can offer data services to the vehicles 211 and 213. The communication between vehicles and the communication system 215 can be implemented via one or more mobile communication systems 217. For example, each of the first and second vehicle 211, 213 can be configured to connect permanently or temporarily to a mobile communication system 217 through which the respective vehicle can communicate with the communication system 215. Alternatively, each vehicle 211, 213 can connect to a cell phone of the respective driver, which can further connect the respective vehicle to the communication system 215 via mobile communication system 217.

The publish-subscribe service 219 can be provided by a publish-subscribe system that can be hosted by the communication system 215 or by a separate communication system with which the vehicles can communicate via one or more mobile communication systems 217. The publish-subscribe service 219 can be a software application that is run on a publish-subscribe system, which can be a server system or any other system that can provide publish-subscribe services.

In the system of Fig. 2, the second vehicle 213 can cause a traffic change as indicated by loop 313. For example, when the second vehicle 213 starts and joins traffic, it contributes to an increase of the traffic density in its surrounding. In another example, when the second vehicle 213 turns off at a crossing or comes to still at a parking place, it can change the traffic density in its surrounding as well. In such and other cases, the second vehicle 213 can publish an event and thereby report its existence in a region and/or a change in the traffic density. In particular, the second vehicle 213 can be configured, in response to causing a traffic change, to generate traffic change information data with information about the traffic change.

The second vehicle 213 can send, see arrow 311, a publication including the traffic change information data with information about the traffic change to queue 221 of the publish-subscribe service 219. In this scenario, the second vehicle 213 can be a publisher of the queue 221. The queue 221 can forward the publication to subscribers, such as the first vehicle 211 or the third vehicle 223. The functionality of the subscriber is described in the following by way of example with regard to the first vehicle 211.

The first vehicle 211 can be configured to receive the publication (see arrow 309) including the traffic change information data with information about the traffic change from the queue 221.

As indicated by loops 301 and 303, the first vehicle 211 can be configured to collect and anonymize data locally (loop 301) and to calculate a delay based on anonymization parameters, such as a traffic density (loop 303).

Moreover, as indicated by loop 319, the first vehicle 211 can be configured to adjust anonymization parameters based on the received information about the traffic change. As indicated by loop 321, the first vehicle 211 can further be configured to anonymize data, in particular such that at least a portion of the traffic change information data is employed for anonymizing the data.

The first vehicle 211 can also be configured to send the anonymized data to the communication system 215, as indicated by arrow 305.

Thus, in the system of Fig. 2, the second vehicle 223 can notify other vehicles, such as the first vehicle 211, of its existence in the surroundings of the vehicles and thereby trigger an update to traffic, for example, when the second vehicle 223 joins the traffic or turns off at a cross or comes to still at a parking place, and, thus, changes the traffic density. In such cases, the second vehicle 213 can publish an event and report its existence in a region with which the queue 221 is associated. Vehicles, such as the first vehicle 211, that subscribe to this "region" queue 221 and can get informed about the publishing vehicle and take the provided information into account when anonymizing data.

In the communication system 215, the process illustrated by loop 317 can also be carried out, which can include a check of the anonymization quality and a calculation of the traffic information.

Further optimizations like those mentioned above for the system of Fig. 1 can also be applied at least in some embodiments. However, a pre-processing of publications received at the queue 221 can be different. The publish-subscribe service 219 can summarize publications, which are also called events, before pushing them to subscribing vehicles, such as the first vehicle 211. A series of publications may be summarized simply by one event. For example, all events that are published within a defined time interval, for example, one minute can be summarized as one single event. This single event includes all necessary information regarding the traffic change in the region within the defined time interval, for example one minute. Therefore, vehicles can receive only this single event, thus reducing communications. The choice of the time interval for summarizing is subject to use cases.

The described system can complement sensor-based detections which can be used by a vehicle to detect other vehicles in its surrounding. However, sensors have limited ranges of effectiveness. The described systems of Figs. 1 and 2 enable and facilitate the exchange of traffic information between vehicles, while imposing limited communication burden on the vehicle-external communication system.

### LIST OF REFERENCE SIGNS

- 11, 211: first vehicle
- 13, 213: second vehicle
- 15, 215: vehicle-external communication system
- 17, 217: mobile communication system
- 19, 219: publish-subscribe service
- 21, 221: queue
- 23, 223: third vehicle
- 101: loop
- 103: loop
- 105: arrow
- 107: arrow
- 109: arrow
- 111: arrow
- 113: loop
- 115: arrow
- 117: loop
- 119: loop
- 301: loop
- 303: loop
- 305: arrow
- 309: arrow
- 311: arrow
- 313: arrow
- 317: loop
- 319: loop
- 321: loop

## Claims

1. A method for exchanging information between vehicles (11, 13) and a vehicle-external communication system (15), the method comprising:
receiving, at a first vehicle (11), information about traffic density in surroundings of the first vehicle (11) from the communication system (15), wherein the first vehicle (11) is a publisher of a queue (21) of a publish-subscribe service (19); and
providing, by the first vehicle (11), a publication including at least a portion of the information about traffic density to the queue (21) of the publish-subscribe service (19), for forwarding the publication to at least a second vehicle (13) which is a subscriber of the queue (21)
anonymizing, by the first vehicle (11), further data, wherein at least a portion of the received information about traffic density is employed for anonymizing of the further data;
calculating, by the first vehicle (11), a time delay for sending the anonymized further data to the communication system (15), wherein at least a portion of the received information about traffic density is employed in the calculation of the time delay, and
sending the anonymized further data to the communication system (15) in accordance with the calculated time delay.

2. The method of claim 1,
wherein the first vehicle (11) sends anonymized data to the communication system (15) and wherein the first vehicle (11) receives the information about traffic density from the communication system (15) in response to sending the anonymized data.

3. A method for exchanging information between vehicles (11, 13) and a vehicle-external communication system (15), the method comprising:
subscribing, by a second vehicle (13), to a queue (21) of a publish-subscribe service (19); and
receiving, at the second vehicle (13), a publication including at least a portion of information about traffic density in surroundings of a first vehicle (11) from the queue (21) of the publish-subscribe service (19), the publication being provided from the first vehicle (11) which is a publisher of the queue (21) and the information about traffic density being provided by the vehicle-external communication system (15) to the first vehicle (11)
anonymizing, by the second vehicle (13), data, wherein at least a portion of the received information about traffic density is employed for anonymizing of the data;
calculating, by the second vehicle (13), a time delay for sending the anonymized data to the communication system (15), wherein at least a portion of the received information about traffic density is employed in the calculation of the time delay, and
sending the anonymized data to the communication system (15) in accordance with the calculated time delay.

4. A vehicle (11) which is configured to carry out the method according to any one of the claims 1 to 3.

5. A system for exchanging information between vehicles (11, 13) according to claim 4 and a vehicle-external communication system (15), the system comprising:
at least a first and second vehicle (11, 13) of the vehicles (11, 13);
the vehicle-external communication system (15); and
a publish-subscribe service (19);
wherein the first vehicle (11) is configured to received information about traffic density in surroundings of the first vehicle (11) from the communication system (15), wherein the first vehicle (11) is a publisher of a queue (21) of a publish-subscribe service (19); and
wherein the first vehicle (11) is configured to provide a publication including at least a portion of the information about traffic density to the queue (21) of the publish-subscribe service (19), wherein the publish-subscribe service (19) is configured to forward the publication to at least the second vehicle (13) which is a subscriber of the queue (21); and
wherein the second vehicle (13) is configured to receive the publication including the at least portion of the information about traffic density from the queue (21) of the publish-subscribe service (19);
wherein the first vehicle (11) is configured to anonymize further data, wherein at least a portion of the received information about traffic density is employed for anonymizing of the further data; and to calculate a time delay for sending the anonymized further data to the communication system (15), wherein at least a portion of the received information about traffic density is employed in the calculation of the time delay, and wherein the anonymized further data is sent to the communication system (15) in accordance with the calculated time delay.

## Patentansprüche

1. Verfahren zum Informationsaustausch zwischen Fahrzeugen (11, 13) und einem fahrzeugexternen Kommunikationssystem (15), wobei das Verfahren umfasst:
Empfangen, an einem ersten Fahrzeug (11), von Informationen über eine Verkehrsdichte in einer Umgebung des ersten Fahrzeugs (11) von dem Kommunikationssystem (15), wobei das erste Fahrzeug (11) ein Publisher einer Warteschlange (21) eines Publish-Subscribe-Dienstes (19) ist; und
Bereitstellen, durch das erste Fahrzeug (11), einer Publikation, die mindestens einen Teil der Informationen über die Verkehrsdichte beinhaltet, an die Warteschlange (21) des Publish-Subscribe-Dienstes (19) zum Weiterleiten der Publikation an mindestens ein zweites Fahrzeug (13), das ein Subscriber der Warteschlange (21) ist,
Anonymisieren, durch das erste Fahrzeug (11), von weiteren Daten, wobei mindestens ein Teil der empfangenen Informationen über die Verkehrsdichte zum Anonymisieren der weiteren Daten eingesetzt wird;
Berechnen, durch das erste Fahrzeug (11), einer Zeitverzögerung für das Senden der anonymisierten weiteren Daten an das Kommunikationssystem (15), wobei mindestens ein Teil der empfangenen Informationen über die Verkehrsdichte bei der Berechnung der Zeitverzögerung eingesetzt wird, und
Senden der anonymisierten weiteren Daten an das Kommunikationssystem (15) entsprechend der berechneten Zeitverzögerung.

2. Verfahren nach Anspruch 1,
wobei das erste Fahrzeug (11) anonymisierte Daten an das Kommunikationssystem (15) sendet und wobei das erste Fahrzeug (11) die Informationen über die Verkehrsdichte von dem Kommunikationssystem (15) als Reaktion auf das Senden der anonymisierten Daten empfängt.

3. Verfahren zum Informationsaustausch zwischen Fahrzeugen (11, 13) und einem fahrzeugexternen Kommunikationssystem (15), wobei das Verfahren umfasst:
Subskribieren, durch ein zweites Fahrzeug (13), einer Warteschlange (21) eines Publish-Subscribe-Dienstes (19); und
Empfangen, an dem zweiten Fahrzeug (13), einer Publikation, die mindestens einen Teil von Informationen über eine Verkehrsdichte in einer Umgebung eines ersten Fahrzeugs (11) aus der Warteschlange (21) des Publish-Subscribe-Dienstes (19) beinhaltet, wobei die Publikation von dem ersten Fahrzeug (11) bereitgestellt wird, das ein Publisher der Warteschlange (21) ist, und die Informationen über die Verkehrsdichte durch das fahrzeugexterne Kommunikationssystem (15) an das erste Fahrzeug (11) bereitgestellt werden,
Anonymisieren, durch das zweite Fahrzeug (13), von Daten, wobei mindestens ein Teil der empfangenen Informationen über die Verkehrsdichte zum Anonymisieren der Daten eingesetzt wird;
Berechnen, durch das zweite Fahrzeug (13), einer Zeitverzögerung für das Senden der anonymisierten Daten an das Kommunikationssystem (15), wobei mindestens ein Teil der empfangenen Informationen über die Verkehrsdichte bei der Berechnung der Zeitverzögerung eingesetzt wird, und
Senden der anonymisierten Daten an das Kommunikationssystem (15) entsprechend der berechneten Zeitverzögerung.

4. Fahrzeug (11), das dazu ausgebildet ist, das Verfahren nach einem der Ansprüche 1 bis 3 auszuführen.

5. System zum Informationsaustausch zwischen Fahrzeugen (11, 13) nach Anspruch 4 und einem fahrzeugexternen Kommunikationssystem (15), wobei das System umfasst:
mindestens ein erstes und ein zweites Fahrzeug (11, 13) der Fahrzeuge (11, 13);
das fahrzeugexterne Kommunikationssystem (15); und
einen Publish-Subscribe-Dienst (19);
wobei das erste Fahrzeug (11) dazu ausgebildet ist, Informationen über eine Verkehrsdichte in einer Umgebung des ersten Fahrzeugs (11) von dem Kommunikationssystem (15) zu empfangen, wobei das erste Fahrzeug (11) ein Publisher einer Warteschlange (21) eines Publish-Subscribe-Dienstes (19) ist; und
wobei das erste Fahrzeug (11) dazu ausgebildet ist, eine Publikation, die mindestens einen Teil der Informationen über die Verkehrsdichte beinhaltet, an die Warteschlange (21) des Publish-Subscribe-Dienstes (19) bereitzustellen, wobei der Publish-Subscribe-Dienst (19) dazu ausgebildet ist, die Publikation an mindestens das zweite Fahrzeug (13) weiterzuleiten, das ein Subscriber der Warteschlange (21) ist; und
wobei das zweite Fahrzeug (13) dazu ausgebildet ist, die Publikation, die den mindestens einen Teil der Informationen über die Verkehrsdichte beinhaltet, von der Warteschlange (21) des Publish-Subscribe-Dienstes (19) zu empfangen; wobei das erste Fahrzeug (11) dazu ausgebildet ist, weitere Daten zu anonymisieren, wobei mindestens ein Teil der empfangenen Informationen über die Verkehrsdichte zum Anonymisieren der weiteren Daten eingesetzt wird; und eine Zeitverzögerung für das Senden der anonymisierten weiteren Daten an das Kommunikationssystem (15) zu berechnen, wobei mindestens ein Teil der empfangenen Informationen über die Verkehrsdichte bei der Berechnung der Zeitverzögerung eingesetzt wird und wobei die anonymisierten weiteren Daten entsprechend der berechneten Zeitverzögerung an das Kommunikationssystem (15) gesendet werden.

## Revendications

1. Procédé d'échange d'informations entre des véhicules (11, 13) et un système de communication externe aux véhicules (15), le procédé comprenant :
la réception, au niveau d'un premier véhicule (11), d'informations concernant la densité du trafic dans l'environnement du premier véhicule (11) provenant du système de communication (15), le premier véhicule (11) étant un éditeur d'une file d'attente (21) d'un service de publication-abonnement (19) ; et
la fourniture, par le premier véhicule (11), d'une publication comprenant au moins une partie des informations relatives à la densité du trafic à la file d'attente (21) du service de publication-abonnement (19), en vue de la transmission de cette publication à au moins un deuxième véhicule (13) qui est abonné à la file d'attente (21)
l'anonymisation, par le premier véhicule (11), de données complémentaires, au moins une partie des informations reçues relatives à la densité du trafic étant utilisée pour anonymiser des données complémentaires ;
le calcul, par le premier véhicule (11), d'un délai d'envoi des données complémentaires anonymisées vers le système de communication (15), au moins une partie des informations reçues relatives à la densité du trafic étant utilisée dans le calcul du délai, et
l'envoi des données complémentaires anonymisées au système de communication (15) conformément au délai calculé.

2. Procédé selon la revendication 1,
dans lequel le premier véhicule (11) envoie des données anonymisées au système de communication (15) et dans lequel le premier véhicule (11) reçoit les informations relatives à la densité du trafic provenant du système de communication (15) en réponse à l'envoi des données anonymisées.

3. Procédé d'échange d'informations entre des véhicules (11, 13) et un système de communication externe aux véhicules (15), le procédé comprenant :
l'abonnement, par un deuxième véhicule (13), à une file d'attente (21) d'un service de publication-abonnement (19) ; et
la réception, par le deuxième véhicule (13), d'une publication comprenant au moins une partie des informations relatives à la densité du trafic dans l'environnement d'un premier véhicule (11) à partir de la file d'attente (21) du service de publication-abonnement (19), la publication étant fournie par le premier véhicule (11) qui est un éditeur de la file d'attente (21) et les informations relatives à la densité du trafic étant fournies par le système de communication externe aux véhicules (15) au premier véhicule (11)
l'anonymisation, par le deuxième véhicule (13), des données, au moins une partie des informations reçues relatives à la densité du trafic étant utilisée pour anonymiser des données ;
le calcul, par le deuxième véhicule (13),
d'un délai d'envoi des données anonymisées vers le système de communication (15), au moins une partie des informations reçues relatives à la densité du trafic étant utilisée dans le calcul du délai, et
l'envoi des données anonymisées au système de communication (15) conformément au délai calculé.

4. Véhicule (11) configuré pour mettre en œuvre le procédé selon l'une des revendications 1 à 3.

5. Système d'échange d'informations entre des véhicules (11, 13) selon la revendication 4 et un système de communication externe aux véhicules (15), le système comprenant :
au moins un premier véhicule et un deuxième véhicule (11, 13) parmi les véhicules (11, 13) ;
le système de communication externe aux véhicules (15) ; et
un service de publication-abonnement (19) ;
dans lequel le premier véhicule (11) est configuré pour recevoir des informations relatives à la densité du trafic dans l'environnement du premier véhicule (11) provenant du système de communication (15), dans lequel le premier véhicule (11) est un éditeur d'une file d'attente (21) d'un service de publication-abonnement (19) ; et
dans lequel le premier véhicule (11) est configuré pour fournir une publication comprenant au moins une partie des informations relatives à la densité du trafic à la file d'attente (21) du service de publication-abonnement (19), dans lequel le service de publication-abonnement (19) est configuré pour transmettre la publication au moins au deuxième véhicule (13) qui est abonné à la file d'attente (21) ; et
dans lequel le deuxième véhicule (13) est configuré pour recevoir la publication comprenant au moins une partie des informations relatives à la densité du trafic provenant de la file d'attente (21) du service de publication-abonnement (19) ;
dans lequel le premier véhicule (11) est configuré pour anonymiser des données complémentaires, au moins une partie des informations reçues relatives à la densité du trafic étant utilisée anonymiser des données complémentaires ; et pour calculer un délai d'envoi des données complémentaires anonymisées vers le système de communication (15), au moins une partie des informations reçues relatives à la densité du trafic étant utilisée dans le calcul de ce délai, et les données complémentaires anonymisées étant envoyées au système de communication (15) conformément au délai calculé.
